# FASCICULE DE BREVET EUROPEEN

(11) **EP 0 538 106 B1**
(45) Date de publication et mention de la délivrance du brevet: **24.05.1995**
(21) Numéro de dépôt: 92402773.3
(22) Date de dépôt: 09.10.1992
(51) Int. Cl.: B60J 1/20

(54) **Store à enrouleur motorisé pour baie galbée**
Motorisiertes Fensterrolle für gebogenes Fenster
Motor-blind of the roller-type for curved window

(30) Priorité: 14.10.1991 FR 9112622
(43) Date de publication de la demande: 21.04.1993
(73) Titulaire: Etablissements FARNIER ET PENIN, F-79300 Bressuire (FR)
(72) Inventeur: Ouvrard, Gaston, F-79300 Bressuire (FR); Boissonneau, Franck, F-79320 Moncoutant (FR)
(74) Mandataire: Robert, Jean-Pierre

(56) Documents cités:
- EP-A- 0 240 747
- FR-A- 2 588 307
- FR-A- 2 646 203
- GB-A- 562 668

## Description

La présente invention concerne un store à enrouleur motorisé destiné notamment à occulter une baie, en particulier une baie de véhicule automobile telle qu'une lunette arrière.

L'occultation des lunettes arrière de véhicules automobiles est un problème délicat à résoudre étant donné la forme particulièrement complexe d'une telle lunette. En effet, dans certains véhicules, la lunette arrière est très inclinée et galbée avec une courbure en général plus accentuée en partie supérieure qu'en partie inférieure. L'occultation d'une telle baie est actuellement réalisée au moyen d'un store fixé sous la tablette arrière et déployé jusqu'au bord supérieur de la lunette, le store s'étendant alors dans un plan qui sous-tend tant bien que mal la surface gauche de la lunette arrière et qui présente l'inconvénient d'être écarté de cette fenêtre notamment à sa base, condamnant ainsi une surface importante de la tablette arrière. En outre, une baie occultée avec un store de ce type ne présente pas une esthétique satisfaisante.

On a déjà proposé des stores dans lesquels la toile est courbe du fait même de la forme de la barre de tirage. Cette barre de tirage est généralement courbée pour coïncider avec la courbure supérieure de la fenêtre arrière qui est plus prononcée que la courbure de cette fenêtre au niveau de la tablette arrière. L'enrouleur étant en général situé sous cette tablette, il faut pouvoir disposer notamment aux extrémités latérales de celle-ci d'une largeur suffisante pour pouvoir y dessiner une fente courbe pour accommoder la barre de tirage dans la position enroulée du store. Un tel espace n'est pas toujours disponible sur les tablettes arrière de certains véhicules.

On rappellera enfin que la motorisation de ce type de store peut être réalisée de plusieurs manières différentes et en particulier grâce à des biellettes déployables conformément au document FR-A-2.646.203.

Pour pallier les inconvénients des stores existants pour lunette arrière de véhicules automobiles, qui ne peuvent pas être logés dans tous les véhicules d'une part et qui d'autre part n'ont pas de caractère esthétique très satisfaisant, l'invention propose un store à enrouleur motorisé pour baie galbée permettant d'être situé au plus près de la glace de la baie, en position déployée et pouvant passer au travers d'une fente rectiligne, donc de faible largeur, d'une tablette arrière sous laquelle serait installé le mécanisme d'enroulement.

A cet effet l'invention a donc pour objet un store de ce type divulgué dans FR-A-2 646 203 comportant :
- un support pour un organe d'enroulement,
- une toile fixée par l'une de ses extrémités à cet organe d'enroulement et par son autre extrémité à une barre de tirage,
- des moyens de déploiement et reploiement de la toile comportant deux biellettes articulées chacune par une extrémité à la barre de tirage, l'autre extrémité de chaque biellette étant montée coulissante sur une glissière solidaire du support et sensiblement parallèle à l'axe d'enroulement de la toile, l'autre extrémité de chaque biellette étant en outre articulée par rapport à cette glissière dans un plan de débattement parallèle à cet axe, et un dispositif d'entraînement synchronisé et en sens opposé du pied coulissant des biellettes le long de la glissière.

Selon l'invention, la barre de tirage étant élastiquement déformable perpendiculairement à la toile, chaque biellette présente à son extrémité articulée à la barre de tirage une surface d'appui plane pour cette barre, qui est dans un plan différent du plan de débattement de sorte que, la toile enroulée, cette surface d'appui soit sensiblement parallèle à l'axe d'enroulement et dans le même plan que la surface correspondante de l'autre biellette et que, la toile déroulée, cette surface d'appui soit dans un plan qui coupe l'axe d'enroulement et qui forme un dièdre avec celui contenant la surface d'appui de l'autre biellette, dont l'arête est sensiblement orthogonale à cet axe d'enroulement de manière à contraindre en flexion la barre de tirage perpendiculairement à la toile au fur et à mesure du déploiement du store. Par cette disposition, le store de l'invention engendre la création d'une courbure du bord supérieur de la toile au fur et à mesure du déploiement du store, la toile ayant un bord supérieur rectiligne lorsqu'elle est enroulée et un bord curviligne lorsqu'elle est déployée, la courbure de ce bord étant apte à épouser la courbure supérieure par exemple de la lunette arrière que la toile occulte.

Dans un mode simple de réalisation de l'invention, chaque biellette est constituée par une barrette plate vrillée entre ses deux extrémités. Chaque biellette s'étend donc dans deux plans sécants. Le premier plan est celui dans lequel est implanté son axe d'articulation au niveau de la glissière et est un plan fixe qui constitue le plan de débattement de la biellette lors du déploiement ou reploiement du store. Le deuxième plan, dans lequel est implanté l'axe d'articulation de la barre de tirage sur chaque biellette, est un plan dont la position varie selon le débattement des biellettes. Ainsi, lorsque les biellettes sont complètement rabattues sur la glissière de pied, leur extrémité libre s'étend dans un plan unique qui est parallèle à sa glissière et qui contient la barre de tirage du store à l'état rectiligne. Au fur et à mesure du débattement des biellettes à partir de cette position, le plan de chacune de leurs extrémités s'incline sur la direction de la glissière pour former avec l'autre plan d'extrémité de l'autre biellette un dièdre se fermant de plus en plus et contraignant la barre de tirage à se galber entre ses articulations.

Compte tenu du fait que le store de l'invention est en général installé sous la tablette arrière d'un véhicule et que la barre de tirage est située au niveau de cette tablette arrière, les biellettes de manoeuvre du store lorsque ce dernier est à l'état enroulé, ne sont pas dans l'alignement l'une de l'autre. Elles sont en effet arrêtées dans une position où elles forment un angle l'une avec l'autre et donc où théoriquement elles induisent une légère courbure de la barre de tirage. Pour corriger cette courbure, chaque biellette comporte à son extrémité attelée à la barre de tirage un coude de compensation. Dans une variante de réalisation ce coude de compensation peut être remplacé par une pièce formant cale.

D'autres caractéristiques et avantages de l'invention ressortiront de la description donnée ci-après d'un mode de sa réalisation.

Il sera fait référence aux dessins annexés dans lesquels :
- la figure 1 est un schéma destiné à mettre en évidence la structure du store selon l'invention,
- la figure 2 est un schéma en perspective du mécanisme mis en oeuvre dans le store selon l'invention en position repliée,
- les figures 3 et 4 sont des vues partielles de variantes de l'extrémité des biellettes mises en oeuvre dans le store de l'invention,
- la figure 5 est une vue schématique de ce mécanisme, le store étant dans son état déployé,
- la figure 6 est une vue en coupe du store selon l'invention disposé sous une tablette arrière de véhicule automobile.

Aux figures, le store selon l'invention comprend, représenté schématiquement, un organe d'enroulement 1 connu en lui-même constitué par un rouleau monté dans un support 2. Entre le rouleau et le support sont disposés des organes élastiques de rappel qui tendent à faire tourner le rouleau dans le sens d'enroulement du store. Une toile 3 est fixée par l'une de ses extrémités au rouleau 1 tandis qu'elle comporte à son autre extrémité une barre de tirage 4. Cette barre de tirage est formée par un plat métallique ou en matière plastique dont la largeur est située dans le plan de la toile de sorte qu'elle présente une grande flexibilité dans un sens perpendiculaire à la toile et une grande raideur dans le plan de la toile. La matière plastique utilisée pourra avantageusement être un polycarbonate.

De manière connue également, au moins dans son principe, le support 2 porte aussi une sorte de glissière 5, parallèle à l'axe du cylindre enrouleur 1 et dans laquelle sont montés à coulissement des chariots 6 et 7. Ces chariots sont attelés à des organes d'entraînement qui assurent leur déplacement le long de la glissière 5 de manière synchronisée et en sens opposé. Ces moyens d'entraînement ne sont pas représentés aux figures. Ils peuvent être constitués notamment par des câbles-crémaillères tels que 6 sur la figure 6 qui chacun sont solidaires d'un chariot et s'étendent à l'intérieur de la glissière 5 de chaque côté de celle-ci et en sens opposé de sorte qu'une roue dentée située au centre de cette glissière et engrènant avec ces câbles crémaillère provoque le mouvement synchronisé et de sens opposé de ceux-ci. D'autres mécanismes d'entraînement aboutissant au même résultat peuvent être envisagés sans sortir du cadre de l'invention. Chacun des chariots porte de manière articulée le pied d'une biellette 8, 9 dont la longueur est sensiblement égale à la moitié de la longueur de la glissière, donc à peu près égale à la moitié de la largeur de la toile du store, la tête de ces biellettes étant articulée à la barre de tirage 4.

Sur cette structure de base connue les spécificités de l'invention sont les suivantes. Chaque chariot 6 et 7 présente une surface d'appui 10, 11 pour le pied de la biellette correspondante lors de son pivotement. Ces surfaces définissent donc le plan de pivotement des biellettes et, d'une manière générale l'orientation de la surface du store à l'état déplié.

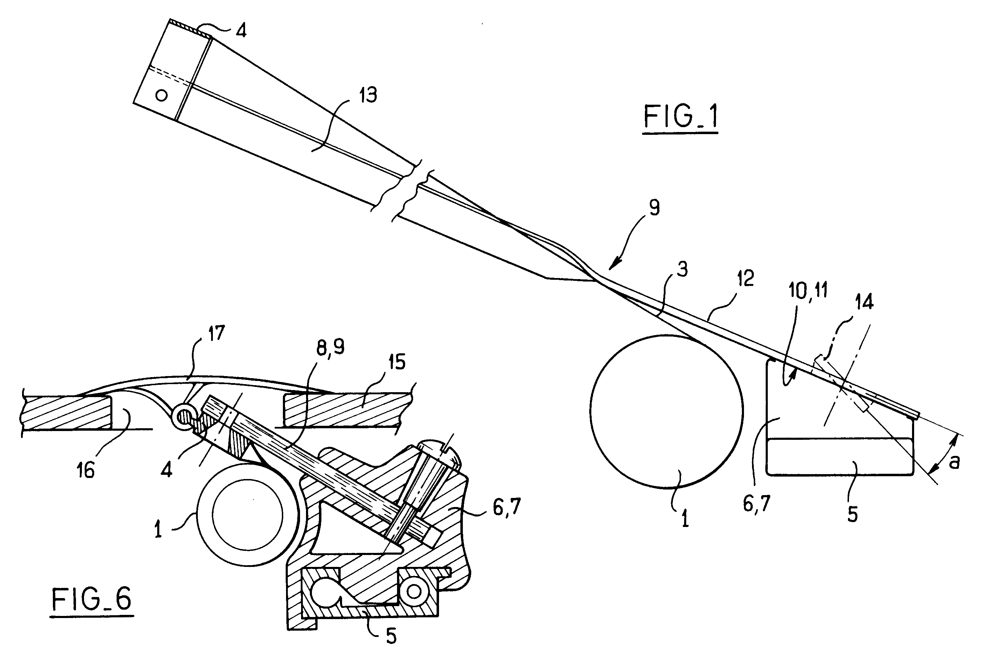

En se référant plus spécialement à la figure 1, on voit que chaque biellette 8, 9 est en fait constituée par une barrette plate qui est vrillée de manière à définir deux plans principaux 12, 13. Le plan 12 situé du côté du pied de chaque biellette, coïncide avec le plan 10 et 11 de pivotement. En revanche, le plan 13 est incliné d'un angle a sur le plan 12. La figure 1, en 14, illustre la position de la partie de tête de chaque biellette lorsque celles-ci sont dans le prolongement l'un de l'autre. Cette position est théorique et on verra pour quelle raison ci-après, mais elle permet de montrer que, dans cette position, les parties 13 de chaque biellette, forment un plan unique dans lequel peut s'étendre de manière rectiligne la barre de tirage 4 qui est articulée à ces parties 13. En revanche, lorsque les chariots s'éloignent l'un de l'autre et que les biellettes tendent à devenir perpendiculaires à la glissière 5, le plan des parties 13 de chaque biellette ne reste pas commun aux deux biellettes comme dans sa position 14 mais chacun d'eux est contenu dans un plan d'un dièdre qui possède une arête perpendiculaire à la glissière 5 et en son milieu du fait de la symétrie des mouvements des biellettes, ce dièdre étant dans son état le plus fermé lorsque les biellettes sont perpendiculaires à la glissière 5 donc quand le store est déployé au maximum. On comprend alors que la barre de tirage est contrainte de fléchir pour rester tangente du fait même de sa fixation aux biellettes, au plan de côté de ce dièdre.

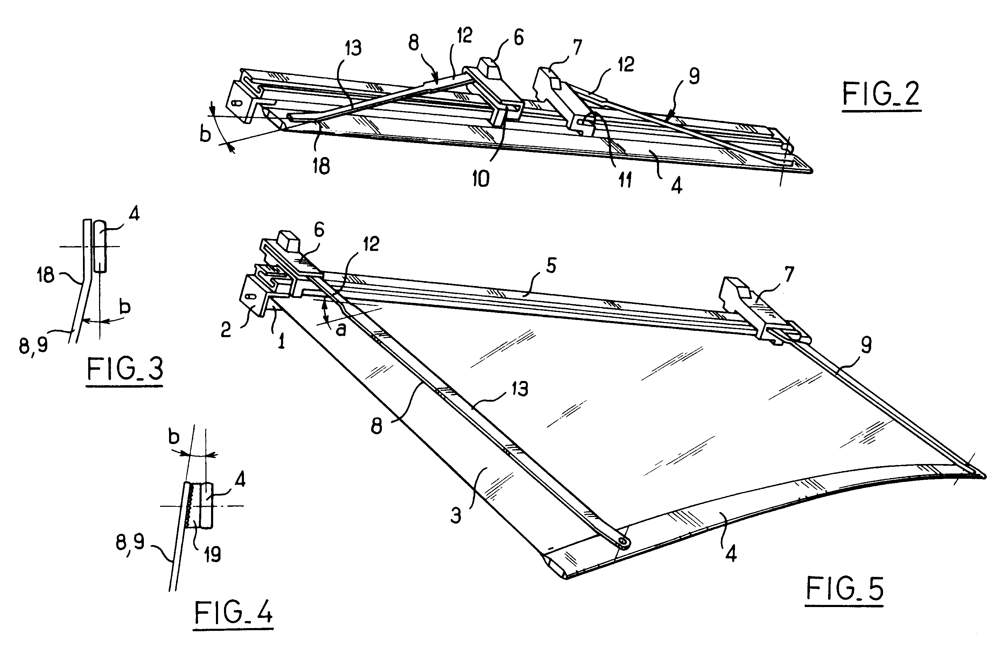

La figure 5 illustre la position prise par la barre de tirage 4.

En fait les biellettes 8 et 9 ne se rabattent pas complètement sur la glissière 5 jusqu'à être dans l'alignement l'une de l'autre car, comme le montre la figure 6, d'une part l'enrouleur de toile est situé en avant de cette glissière et d'autre part la barre de tirage est arrêtée sensiblement au niveau de la tablette arrière 15 d'un véhicule sous laquelle le mécanisme est disposé. Le store est déployé au travers d'une fente 16 de cette tablette 15 et la barre de tirage 4 possède une garniture 17 qui a pour première fonction lorsque le store est reployé, de venir boucher la fente 16. Pour ces raisons, les biellettes sont déjà au début de leur déploiement lorsque le store est en position rétractée. On comprend donc que les plans 13 de chaque biellette ne sont plus dans un plan commun 14 comme cela le serait si les biellettes étaient en alignement l'une de l'autre. La barre de tirage subit donc de ce fait une légère contrainte qui commence à la fléchir. Pour interdire cette flexion, l'extrémité de chaque biellette, à laquelle la barre de tirage est articulée, comporte un moyen de compensation pour replacer l'extrémité des parties 13 dans le même plan ce qui garantit la rectitude de la barre de tirage 4, ce moyen de compensation pouvant consister soit en un coude 18 de l'extrémité de la bielle d'angle b par rapport à la direction générale de celle-ci (voir figures 2 et 3), soit en une pièce complémentaire 19 disposée entre la barre de tirage et l'extrémité de la biellette pour obtenir cet angle b (voir figure 4).

On comprend bien qu'il ne s'agit pas de replacer l'extrémité de chaque biellette dans un plan parallèle au plan de pivotement contenant les parties 13 de chaque biellette, car dans ce cas rien ne se produirait sur la barre de tirage, mais simplement une déflexion de l'extrémité de ces biellettes pour les rendre coplanaires à ce point précis de l'extension du store. Ceci permet de conserver à la barrette sa rectitude au niveau de la fente 16 dans laquelle elle est logée.

On notera enfin une dernière particularité de l'invention tenant à la présence de la garniture 17. Cette garniture, lorsque le store est déployé, permet à la barre de tirage de s'appuyer sur la glace par exemple de la lunette arrière du véhicule et d'épouser donc parfaitement sa courbure. Pour autant que la garniture soit en un matériau adéquat, elle amortira le contact entre la barre de tirage et cette glace évitant ainsi du bruit ou un frottement trop agressif.

## Revendications

1. Store à enrouleur motorisé pour baie galbée comportant :
- un support (2) pour un organe (1) d'enroulement,
- une toile (3) fixée par l'une de ses extrémités à cet organe d'enroulement et par son autre extrémité à une barre (4) de tirage,
- des moyens de déploiement et reploiement de la toile (3) comportant deux biellettes (8,9) articulées chacune par une extrémité à la barre de tirage (4), l'autre extrémité de chaque biellette étant montée coulissante sur une glissière (5) solidaire du support (2) et sensiblement parallèle à l'axe d'enroulement de la toile (3), l'autre extrémité de chaque biellette (8, 9) étant en outre articulée par rapport à cette glissière (5) dans un plan (10, 11) de débattement parallèle à cet axe et un dispositif d'entraînement synchronisé et en sens opposé (6,7) du pied coulissant des biellettes le long de la glissière (5), caractérisé en ce que la barre (4) de tirage étant élastiquement déformable perpendiculairement à la toile (3), chaque biellette (8,9) présente à son extrémité articulée à la barre de tirage (4) une surface d'appui (13) plane pour la barre (4) qui est dans un plan (13) différent du plan (10, 11) de débattement de sorte que, la toile enroulée, cette surface d'appui (13) soit sensiblement parallèle à l'axe d'enroulement et dans le même plan que la surface correspondante de l'autre biellette et que, la toile déroulée, cette surface d'appui (13) soit dans un plan qui coupe l'axe d'enroulement et qui forme un dièdre avec celui contenant la surface d'appui (13) de l'autre biellette, l'arête de ce dièdre étant sensiblement orthogonale à l'axe d'enroulement de manière à contraindre en flexion la barre de tirage (4) perpendiculairement à la toile, au fur et à mesure du déploiement du store.

2. Store selon la revendication 1 caractérisé en ce que chaque biellette (8, 9) est constituée par une barrette plate vrillée entre ses deux extrémités.

3. Store selon la revendication 2 caractérisé en ce que, dans l'état replié du store, les biellettes n'étant pas dans le prolongement l'une de l'autre, chaque biellette (8,9) comporte à son extrémité attelée à la barre de tirage (4) un coude (18) de compensation.

4. Store selon la revendication 2, caractérisé en ce que chaque biellette (8,9) comporte à son extrémité une pièce complémentaire (19) de compensation.

5. Store selon l'une quelconque des revendications précédentes caractérisé en ce que la barre de tirage (4) porte au voisinage de son arête supérieure une garniture souple (17).

## Claims

1. A blind having a motor-drive winder and for a curved bay, the blind comprising:
a support (2) for a winder member (1);
a cloth (3) having one of its ends fixed to said winder member and having its other end fixed to a pull-bar (4); and
means for deploying or retracting the cloth (3), said means comprising two arms (8, 9) each hinged at one end to the pull-bar (4), the other end of each arm being mounted in hinged and slidable manner relative to a slideway (5) secured to the support (2) and extending substantially parallel to the winding axis of the cloth (3), said other end of each arm (8, 9) being hinged with respect to said slideway (5) in an oscillating plane (10, 11) which is parallel to said winding axis, and a drive device (6, 7) for providing synchronized and opposite-direction drive of the sliding ends of the arms along the slideway (5);
characterized in that the pull-bar (4) is elastically deformable perpendicularly to the cloth (3), each arm (8, 9) has a plane bearing surface (13) for the pull-bar (4) at its end hinged to the bar (4), which surface lies in a plane (13) other than said oscillating plane (1O, 11) so that, when the cloth (3) is wounded in, said bearing surface (13) is substantially parallel to the winding axis and lies in the same plane as the corresponding surface of the other arm, and that when the cloth is unwound, said bearing surface (13) lies in a plane that intersects the winding axis and that forms a dihedral with the plane containing the corresponding surface (13) of the other arm, the edge of said dihedral angle being substantially orthogonal to the winding axis, thereby constraining the pull-bar (4) to bend perpendicularly to the cloth as the blind is deployed.

2. A blind according to claim 1, characterized in that each arm (8, 9) is constituted by a flat strip that is twisted between its two ends.

3. A blind according to claim 2, characterized in that when the blind is in its folded state, the arms are not in alignment with each other, and each arm (8, 9) has a compensating bend (18) at its end which is coupled to the pull-bar (4).

4. A blind according to claim 2, characterized in that each arm (8, 9) carries a complementary compensation part (19) at its end.

5. A blind according to any preceding claim, characterized in that the pull-bar (4) carries a flexible trim fitting (17) in the vicinity of its top edge.

## Patentansprüche

1. Motorisch verstellbares Rollo für ein gekrümmtes Fenster, umfassend:
einen Träger (2) für ein Aufrollorgan (1),
eine Stoffbahn (3), die mit einem ihrer Enden an diesem Aufrollorgan und mit ihrem anderen Ende an einer Zugstange (4) befestigt ist,
Mittel zum Ausbreiten und Einziehen der Stoffbahn mit zwei Lenkern (8, 9), die jeweils mit einem Ende an der Zugstange (4) angelenkt sind, während das andere Ende jedes Lenkers an einer Gleitführung (5) gleitend gelagert ist, die mit dem Träger (2) verbunden ist und im wesentlichen parallel zur Aufrollachse der Stoffbahn (3) gerichtet ist, wobei das andere Ende jedes Lenkers (8, 9) außerdem gegenüber dieser Gleitführung (5) in einer Schwenkebene (10, 11) schwenkbar ist, die parallel zu dieser Achse ist, und eine Vorrichtung zum synchronen und gegenläufigen Antrieb der Fußstücke (6, 7) der Lenker entlang der Gleitführung (5),
dadurch **gekennzeichnet**,
daß die Zugstange (4) senkrecht zur Stoffbahn (3) elastisch verformbar ist, daß jeder Lenker (8, 9) an seinem an der Zugstange (4) angelenkten Ende für die Zugstange (4) eine Anlagefläche (13) hat, die in einer von der Schwenkebene (10, 11) verschiedenen Ebene liegt derart, daß bei aufgerollter Stoffbahn diese Anlagefläche (13) im wesentlichen parallel zur Aufrollachse und in derselben Ebene wie die entsprechende Fläche des anderen Lenkers liegt, und daß bei ausgerollter Stoffbahn diese Anlagefläche (13) in einer Ebene liegt, welche die Aufrollachse schneidet und mit jener die Anlagefläche (13) des anderen Lenkers enthaltenden Ebene einen Dieder bildet, wobei der Scheitel dieses Dieders im wesentlichen senkrecht zur Aufrollachse so verläuft, daß die Zugstange (4) in dem Maße, wie das Rollo entfaltet wird, senkrecht zur Stoffbahn auf Biegung beansprucht wird.

2. Rollo nach Anspruch 1, dadurch **gekennzeichnet**, daß jeder Lenker (8, 9) von einer flachen Stange gebildet ist, die zwischen ihren beiden Enden verschränkt ist.

3. Rollo nach Anspruch 2, dadurch **gekennzeichnet**, daß aufgrund der Tatsache, daß im eingefahrenen Zustand des Rollos die Lenker nicht miteinander in Flucht sind, jeder Lenker (8, 9) an seinem an der Zugstange (4) befestigten Ende einen Kompensationsknick (18) hat.

4. Rollo nach Anspruch 2, dadurch **gekennzeichnet**, daß jeder Lenker (8, 9) an seinem Ende ein komplementäres Kompensationsstück (19) trägt.

5. Rollo nach einem der vorhergehenden Ansprüche, dadurch **gekennzeichnet**, daß die Zugstange (4) nahe ihrer Oberkante eine weiche Abdeckung (17) trägt.
